# EUROPEAN PATENT APPLICATION

(11) **EP 0 778 551 A2**
(43) Date of publication of application: **11.06.1997**
(21) Application number: 96119365.3
(22) Date of filing: 03.12.1996
(51) Int. Cl.: G07F 7/08, G07F 19/00, G06F 17/60, G06K 7/08

(54) **Reader/writer for electronic money card for use in personal computer and personal computer including the same**

(30) Priority: 08.12.1995 JP 320659/95
(71) Applicant: HITACHI, LTD., Chiyoda-ku, Tokyo 101 (JP)
(72) Inventor: Ohki, Masayuki, Kokubunji-shi (JP); Urushihara, Atsuhiko, Kokubunji-shi (JP); Furuya, Jun, Kokubunji-shi (JP); Itoh, Shigeyuki, Kawasaki-shi (JP); Kitagawa, Hiroki, Tokyo (JP); Oosawa, Takao, Niiza-shi (JP)
(74) Representative: Beetz & Partner Patentanwälte

(57) **Abstract**

A reader/writer (33) for an electronic money card of a personal computer (32) includes a control unit (3309, 3315) for performing reading and writing of the electronic money card (10) including at least an integrated circuit capable of writing and reading digital information.

## Description

### BACKGROUND OF THE INVENTION

The present invention relates to a reader/writer for an electronic money card and a personal computer including the reader/writer for interfacing between the electronic money card used in an electronic currency system and the personal computer including a memory card slot and more particularly to a reader/writer for an electronic money card for use in a personal computer and a personal computer including the reader/writer which is connected to the memory card slot of the personal computer and suitable for use in interface between the personal computer and the electronic money card in the electronic currency system in which the electronic money card accommodating electronic money is used to cause the personal computer to perform data processing in the electronic money card and settlement of accounts by electronic money between the electronic money cards.

Recently, an electronic currency system is proposed in which electronic money is exchanged by communication between electronic money cards accommodating electronic money, for example IC cards. The IC card used in the system includes a microprocessor having the communication function and a memory such as an EEPROM for storing a processing program and the remainder of electronic money. The IC card can perform receipts and payments of electronic money between the IC card and another through the electronic currency system capable of being connected to a terminal provided in a bank, a store, an individual home or the like through a communication line or by using a personal terminal.

On the other hand, personal computers having a memory card slot into which an extension board standardized to expand the function thereof, for example a memory card, is mounted are spread. Further, JP-A-6-131508 and JP-A-7-295682 disclose an IC card information processing apparatus and an IC memory card unit mounted or inserted into the memory card slot to interface between the IC card and the personal computer.

### SUMMARY OF THE INVENTION

It is an object of the present invention to provide a reader/writer for an electronic money card for use in a personal computer and a personal computer including the reader/writer suitable for use in interface between the personal computer and the electronic money card upon settlement of accounts by electronic money between electronic money cards in the electronic currency system.

According to the present invention, the reader/writer for an electronic money card of a personal computer used with the electronic money card including at least an integrated circuit capable of writing and reading digital information includes a control unit for reading from and writing to the electronic money card.

Further, the reader/writer for an electronic money card comprises reading/writing apparatus for reading and writing digital information in the electronic money card, apparatus for detecting that a program for handling electronic money in the electronic money card is stored on the basis of information read by the reading/writing apparatus, electronic money processing apparatus operative on the basis of an output of the detecting apparatus and for accessing to the electronic money program in the electronic money card, and data input/output apparatus for inputting and outputting digital information between the electronic money processing apparatus and an external device. Alternatively, all of the apparatuses described above are integrated into a one-chip control LSI.

Furthermore, the reader/writer for an electronic money card for interfacing between the electronic money card used in the electronic currency system and a personal computer including a money card slot comprises a connector portion for connecting to a memory card connector of a memory card, a card insertion opening in which the electronic money card is inserted, a connector for electrically connecting to the electronic money card inserted into the card insertion opening, and a control unit for reading from and writing to the electronic money card.

Further, the reader/writer for an electronic money card comprises reading/writing apparatus for reading digital information from and writing digital information to the electronic money card, apparatus for detecting that a program for handling electronic money in the IC card is stored on the basis of information read by the reading/writing apparatus, electronic money processing apparatus operative on the basis of an output of the detecting apparatus and for accessing to the electronic money program in the electronic money card, and data input/output apparatus for inputting and outputting digital information between the electronic money processing apparatus and an external device. The input/output apparatus includes a connector portion for connecting to a memory card connector of a memory card and a connector for electrically connecting to the electronic money card inserted into a card insertion opening in which the electronic money card is inserted. Alternatively, all of the above apparatuses are integrated into a one-chip control LSI.

Further, a personal computer including a control unit, a display unit, an input unit, a memory unit and a memory card slot comprises a reader/writer for an electronic money card mounted to the memory card slot and for interfacing the electronic money card including at least an integrated circuit capable of writing and reading digital information and the personal computer. The reader/writer for the electronic money card includes a connector portion for connecting to a memory card connector of a memory card, a card insertion opening into which the electronic money card is inserted, a connector for electrically connecting to the electronic money card inserted into the card insertion opening, and a control unit for reading from and writing to the electronic money card.

Furthermore, a personal computer including a control unit, a display unit, an input unit, a memory unit and a memory card slot comprises a reader/writer for an electronic money card mounted to the memory card slot and for interfacing the electronic money card including at least an integrated circuit capable of writing and reading digital information and the personal computer. The reader/writer for the electronic money card includes reading/writing apparatus for reading digital information from and writing digital information to the electronic money card, an apparatus for detecting that a program for handling electronic money in the electronic money card is stored on the basis of information read by the reading/writing apparatus, electronic money processing apparatus operative on the basis of an output of the detecting apparatus and for accessing to the electronic money program in the electronic money card, and data input/output apparatus for inputting and outputting digital information between the electronic money processing apparatus and an external device. The data input/output apparatus includes a connector portion for connecting to a memory card connector of a memory card and a connector for electrically connecting to the electronic money card inserted into a card insertion opening in which the electronic money card is inserted. The control unit of the personal computer reads the electronic money sub-program stored in the memory and accesses to the electronic money processing apparatus.

### BRIEF DESCRIPTION OF THE DRAWINGS

Fig. 1 is a block diagram schematically illustrating an electronic currency system to which a PC type card reader/writer according to the present invention is applied;
Fig. 2 is a perspective view showing an external appearance of a PC card reader/writer according to a first embodiment of the present invention;
Fig. 3 is a perspective view showing an external appearance of a PC card reader/writer according to a second embodiment of the present invention;
Figs. 4A and 4B show a personal computer to which the PC card reader/writer according to the second embodiment is inserted;
Fig. 5 illustrates a configuration of an IC card reader/writer including the electronic wallet function according to an embodiment of the present invention in the block diagrammatic manner and a connection of the IC card reader/writer to a personal computer capable of utilizing the IC card reader/writer;
Fig. 6 is a block diagram schematically illustrating a definite example of the IC card for electronic wallet;
Fig. 7 is a block diagram schematically illustrating a personal computer body to which the card reader/writer according to the embodiment of the present invention described above is connected;
Fig. 8 is a block diagram schematically illustrating an IC card reader/writer including the electronic wallet function according to another embodiment of the present invention;
Fig. 9 is a block diagram schematically illustrating an IC card reader/writer including the electronic wallet function according to still another embodiment of the present invention;
Fig. 10 is a flow chart showing operation of the IC card reader/writer including the electronic wallet function according to an embodiment of the present invention and the personal computer;
Fig. 11 illustrates a transfer display picture of the personal computer equipped with the IC card reader/writer including the electronic wallet function according to an embodiment of the present invention and another personal computer; and
Fig. 12 is a flow chart showing operation of the personal computer equipped with the IC card reader/writer including the electronic wallet function according to an embodiment of the present invention and another personal computer.

### DESCRIPTION OF THE PREFERRED EMBODIMENTS

An embodiment of a reader/writer (hereinafter referred to as a PC card reader/writer) according to the present invention which can be mounted into a memory card slot of a personal computer in an electronic currency system is now described with reference to the accompanying drawings.

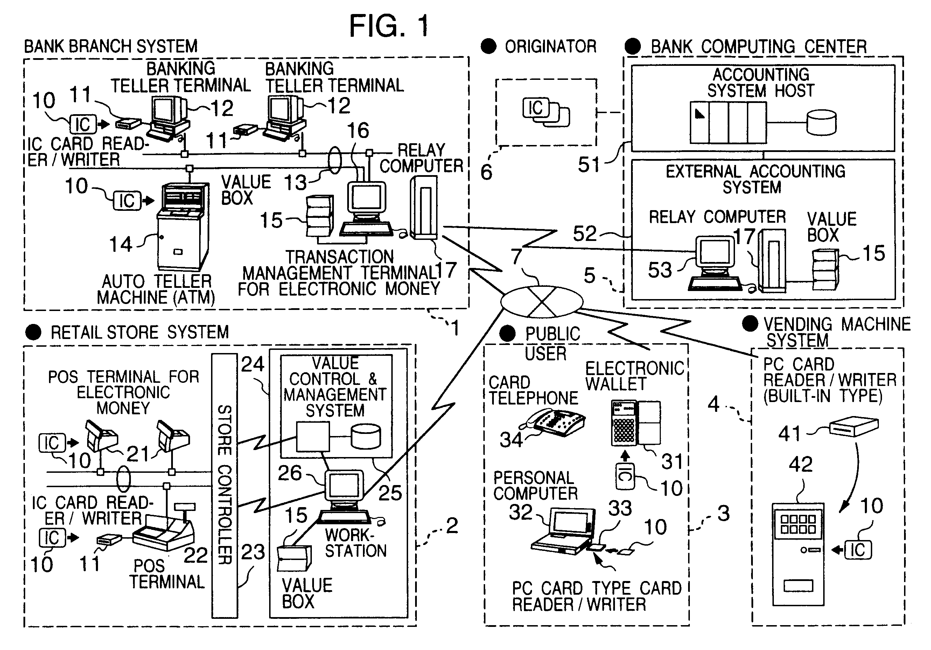

Fig. 1 is a block diagram schematically illustrating an electronic currency system to which the PC card type reader/writer according to the present invention is applied. A configuration of the electronic currency system is first described with reference to Fig. 1. In Fig. 1, numeral 1 denotes a bank branch system, 2 a retail store system, 3 a public user system, 4 a vending machine system, 5 a bank computing center, 6 an originator, 7 a public communication network, 10 an IC card, 11 an IC card reader/writer of an external connection type, 12 a banking tellv terminal, 13 internal communication lines, 14 an auto tellev machine (ATM), 15 a value box, 16 a transaction management terminal for electronic money, 17 a relay computer, 21 a POS terminal for electronic money, 22 a POS terminal, 23 a store controller, 24 a center apparatus, 25 an information control system, 26 a work station, 31 an electronic wallet, 32 a personal computer, 33 a PC card reader/writer, 34 an IC card telephone, 41 a built-in IC card reader/writer, 42 a vending machine, 51 an accounting system host, 52 an external accounting system, and 53 an external connection system control terminal.

The electronic currency system of Fig. 1 includes the bank branch system 1, the retail store system 2 installed in an emporium such as a department store and a supermarket and the IC card telephone 34 connected to the public communication network 7 and further includes the vending machine system 4 and the like as the system not connected to the public communication network 7. In the embodiment shown in Fig. 1, each of the various systems is shown by only one representative system, while a number of systems for each type can be provided to be connected to the public communication network 7. Further, the bank branch system is connected to the bank computing center 5 of the bank through a private line or the like and the bank computing center 5 is connected to the originator 6.

The IC card 10 includes a microprocessor having the communication function therein and a memory such as an EEPROM for storing a processing program and the remainder of electronic money. The IC card 10 is carried by an individual who is a public user and is possessed by a bank, a store, a vending machine and the like participating in the electronic currency system.

In the bank branch system 1, as well known, the banking tellev terminals 12 at the window are connected to the auto teller machine 14 through the internal communication lines 13 and further the bank branch system 1 is connected through the relay computer 17 to the bank computing center. For the settlement of accounts of electronic money, each of the banking teller terminals 12 is provided with the IC card reader/writer 11 and the auto teller machine 14 includes the IC card reader/writer therein. Further, the transaction management terminal for electronic money 16 is connected to the value box 15.

The bank computing center 5 includes the accounting system host 51 and the external accounting system 52, and the external accounting system 52 includes the external system control terminal 53, the relay computer 17 and the value box 5.

In the retail store system 2, usually, the POS terminal is connected through the internal communication lines 13 and the store controller 23 to the center apparatus 24. For the settlement of accounts of electronic money, the IC card reader/writer 11 is connected to the ordinary POS terminal 22 externally or the POS terminal 21 for electronic money is used. Further, the center apparatus 24 includes the information control system 25, the work station 26 and the value box 15.

The public end user system 3 is mainly a personal user system and may be simply constituted by only the electronic wallet 31 which can display the remainder of electronic money in the IC card. The function of an electronic calculator or the like can be also provided in the electronic wallet 31. Further, the personal computer 32 is constituted by a personal computer possessed by the individual and provided with the PC card reader/writer 33 for the settlement of accounts for electronic money and is configured to be able to be connected to the public communication line 7. Further, the public user system 3 can use the IC card telephone 34 constituted by a usual telephone provided with the processing function to the IC card 10 accommodating electronic money.

The personal computer 32 and the IC card telephone 34 in the public user system 3 can include two sets of card reader/writers for two IC cards to thereby perform receipts and payments of electronic money between the two IC cards. Thus, the same process as the normal cash transaction such as, for example, transfer of electronic money in a husband's IC card to a wife's IC card can be performed.

The vending machine system 4 is constituted by the vending machine 42 including the IC card reader/writer 41 therein.

An utilization method of the electronic currency system configured above and to which the present invention is applied is now described.

The IC cards 10 are distributed to the banks, the stores, the vending machines, the individuals and the like participating in the system from the originator 6 and further the bank receives electronic money in exchange for cash usually circulated and stores the electronic money into the value box 15 provided in the external connection system 52. The value box 15 stores a large number of IC cards 10, in which electronic money distributed and received from the originator is accommodated. The electronic money accommodated in the IC cards in the value box 15 of the external connection system 52 is distributed into the IC cards in the value boxes 15 of the bank branch systems 1 installed in branch offices of the banks.

The individual as a public user participating in the electronic currency system carries the distributed IC card 10. Thus, the individual withdraws a deposit from his account provided in the bank by means of the banking teller terminal 12 at the auto teller machine 14 of the bank branch system 1 and exchanges the withdrawn deposit for electronic money, which is accommodated in his IC card 10. Further, the individual can connect his personal computer 32 including the PC card reader/writer 33 or the IC card telephone 34 to the bank branch system 1 through the public communication network 7 to thereby withdraw a deposit from his account provided in the bank and exchange it for electronic money, which can be accommodated in his IC card 10.

When the electronic money is withdrawn, the IC card possessed by the individual may be connected to the IC card in the value box 15 of the bank branch system 1 through the banking teller terminal 12, the auto teller machine 14 and the personal computer 32 or the reader/writer of the IC card telephone 34 by means of the communication function provided in his card. The electronic money accommodated in the IC card 10 in the value box 15 of the bank branch system 1 is accommodated in the IC card 10 possessed by the individual under control of the transaction management terminal for electronic money 16. At this time, the remainder of electronic money accommodated in the IC card 10 in the value box 15 of the bank branch system 1 is reduced by the amount accommodated in the IC card 10 possessed by the individual. Further, withdrawal of a deposit from the individual's account is performed in the same manner as the conventional method.

In the foregoing description, a deposit is withdrawn from the individual's bank account and is accommodated in his own IC card, while the individual can bring cash to the window of the bank or the originator and have the bank or the originator accommodate it into the IC card.

Conversely, electronic money in the IC card can be returned into the IC card in the value box 15 of the bank branch system 1 through the banking teller terminal 12 at the window, the auto teller machine 14 and the personal computer 32 and at the same time be deposited in his account.

As described above, the user having his own IC card 10 in which electronic money is accommodated can use the IC card in the same manner as cash and buy goods in various stores or the like and further can receive various services.

It is now assumed that the user carrying his own IC card 10 in which electronic money is accommodated does his shopping in a store and brings his purchased goods to a counter with the POS terminal for payment thereof. A person in charge at the counter inputs selling prices of the goods from the POS terminal 21 or 22 by reading bar codes of the goods and calculates the sum total thereof to demand it to the buyer.

When the buyer makes payment by the IC card accommodating electronic money instead of cash, the buyer inserts the IC card into a card insertion opening of the POS terminal 12 for electronic money or the IC card reader/writer 11 connected to the usual POS terminal 22. Consequently, the IC card of the buyer is connected to one IC card in the value box 15 installed in the center apparatus 24 of the store through the internal communication lines and the work station 26 and electronic money in the IC card of the buyer is transferred to the IC card in the value box 15 installed in the center apparatus 24, so that a receipt is produced from the POS terminal to complete the payment for the shopping. In this case, the electronic money in the IC card of the buyer is reduced by an amount used for the shopping and the amount is added to electronic money of the IC card of the store.

In the foregoing description, the price for the transaction of the goods is paid in the retail store system including the many POS terminals and the value box provided in the center apparatus 24 and in which many IC cards are stored, while in the system of a personal store or the like provided with only one deposit terminal, an IC card reader/writer for the customer's IC card is provided in the deposit terminal and IC cards possessed by the store are provided in the deposit terminal, so that payment by electronic money can be made between the IC card possessed by the store and the customer's IC card connected through the IC card reader/writer to the deposit terminal. Thus, as described above, electronic money in the IC card possessed by the store can be inputted into the account of the bank or can be exchanged into cash at the window of the bank.

Further, in the retail store system including the POS terminals, each POS terminal is provided with an IC card. Transfer of money can be made between the IC card in the POS terminal and the customer's IC card and if necessary money can be transferred from the POS terminal to the IC card in the value box 15 of the center apparatus 24.

In addition, when the vending machine 42 participates in the electronic currency system, the built-in IC card reader/writer 41 is provided in the vending machine 42 and an IC card is provided in the vending machine itself, so that transfer of money may be made between the vending machine and the customer's IC card inserted into the IC card reader/writer 41.

An embodiment of the PC card reader/writer of the present invention used in the electronic currency system used as described above is now described with reference to the drawings.

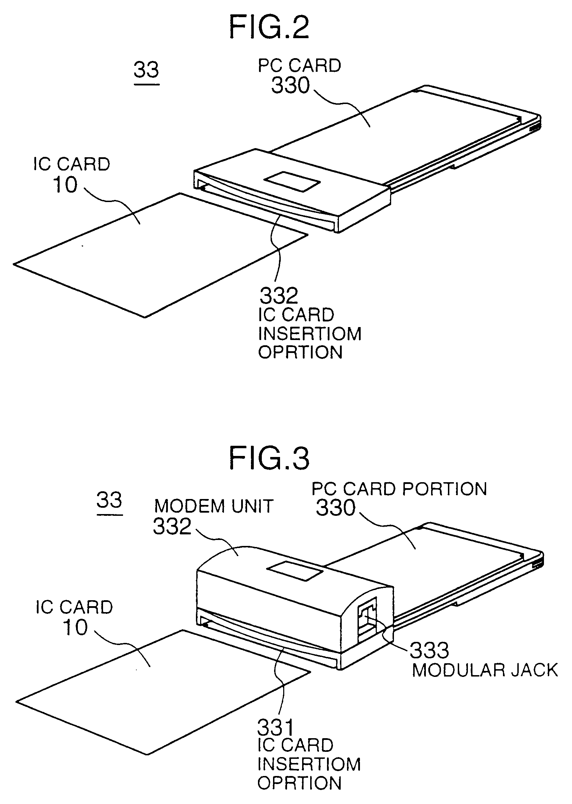

Fig. 2 is a perspective view showing an external appearance of the PC card reader/writer according to a first embodiment of the present invention. In Fig. 2, numeral 330 denotes a PC card portion, 331 an insertion opening of the IC card, and other reference numerals are the same as those of Fig. 1.

The PC card reader/writer 33 according to the first embodiment of the present invention includes, as shown in Fig. 2, the PC card portion 330 and the IC card insertion opening 332 and is used by inserting the PC card portion 330 into a card slot of an information apparatus (hereinafter referred to a personal computer) such as a personal computer not shown and by inserting the IC card 10 accommodating electronic money described in conjunction with Fig. 1 into the IC card insertion opening. Stored in the IC card 10 are electronic money, personal history, personal information and the like. The PC card reader/writer 33 interfaces between the personal computer and the IC card 10 and is used to perform reading, writing and updating of data in the IC card by the personal computer.

In this case, the processing of data in the IC card 10 performed in the personal computer is related to data such as personal history, personal information and the like and the processing relative to electronic money includes reading of electronic money and inquiry of the remainder. Further, when the personal computer itself has the communication function, the personal computer can be connected through the communication line to another personal computer, a terminal of the bank, a terminal of a trader concerning the distribution service or the like to thereby perform receipts and payments of electronic money therebetween. Further, as described later, when two sets of PC card reader/writers 33 are connected to one personal computer and IC cards are inserted to the two sets of PC card reader/writers, receipts and payments of electronic money can be performed between the two IC cards.

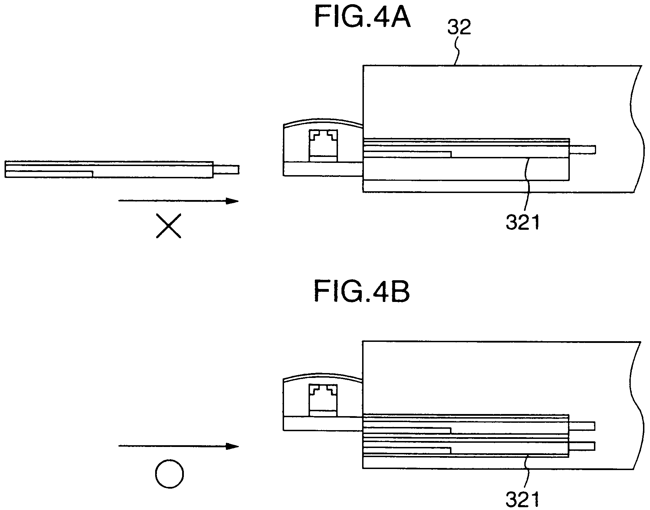

Fig. 3 is a perspective view showing an external appearance of a PC card reader/writer according to a second embodiment of the present invention and Fig. 4 illustrates the PC card reader/writer according to the second embodiment inserted into the personal computer. In Figs. 3 and 4, numeral 321 denotes a PC card slot, 332 a modem unit, 333 a modular jack, and other reference numerals are the same as those of Figs. 1 and 2.

The PC card reader/writer 33 according to the second embodiment of the present invention includes the modem unit 332 having the modular jack 333 in addition to the PC card reader/writer described in Fig. 2 so as to cause the PC card reader/writer itself to have the communication function and is effective when it is used together with a personal computer having no communication function. The PC card reader/writer 33 according to the second embodiment can perform the same functions as those of the PC card reader/writer described in Fig. 2 except that a communication line such as a telephone line can be connected to the modular jack 333. An IC card reader/writer together with an IC card have been disclosed in U.S. Patent Application Serial No. 08/690,966, entitled Pocket-size Information Transfer Apparatus. This apparatus can also be used for the present invention instead of the IC card reader/writer shown in Figs. 2 and 3.

In Figs. 4A and 4B illustrating the inserted PC card reader/writer into the personal computer, the PC card portion 330 of the PC card reader/writer of Fig. 3 mounted to the modem unit 332 at a middle portion and a lower portion of the side thereof is inserted into the PC card slot 321 of the personal computer. The personal computer 32 is provided with two PC card slots 321 disposed vertically.

In an example shown in Fig. 4A, the PC card portion 330 is mounted to the modem unit 332 at the middle portion of the side thereof. In this case, when the PC card reader/writer is inserted into one PC card slot 321 of the personal computer, other PC card slot 321 cannot be used. However, as shown in Fig. 4B, when the PC card portion 330 is mounted to the modem unit 332 at the lower portion of the side thereof and the PC card reader/writer is inserted into the upper PC card slot 321 of the personal computer, another PC card can be inserted into the lower PC card slot 321.

The PC card inserted in the lower slot can include the PC card reader/writer of the type described in Fig. 2, so that two IC cards can be connected to one personal computer. In this manner, when the two IC cards are connected to the personal computer, the personal computer can perform receipts and payments of electronic money between the two IC cards.

The functional configuration in the PC card reader/writer according to the present invention is now described with reference to the drawings.

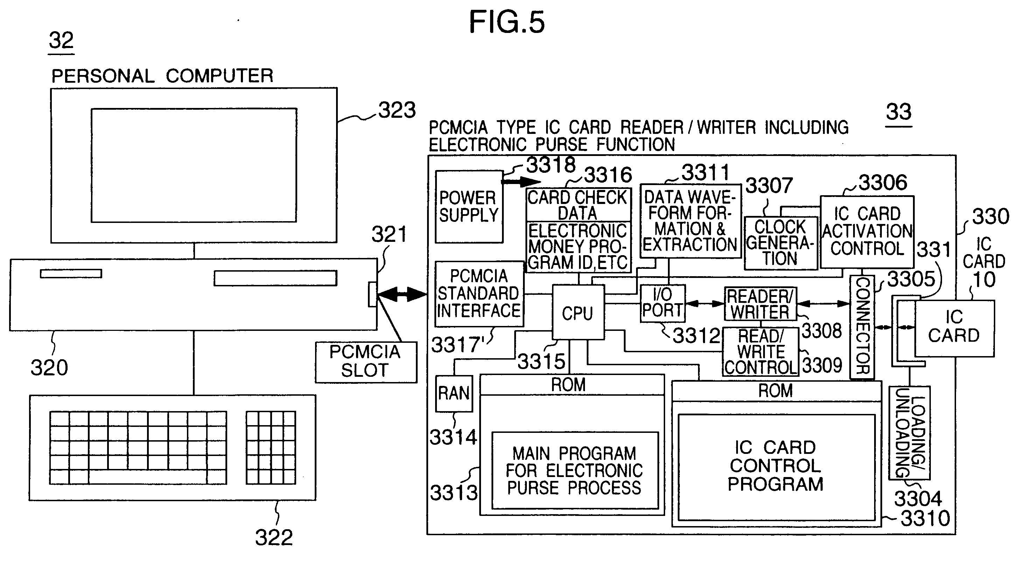

Fig. 5 illustrates a configuration of an IC card reader/writer including the electronic wallet function according to an embodiment of the present invention in the block diagrammatic manner and a connection of the IC card reader/writer to a personal computer capable of utilizing the IC card reader/writer. In the embodiment, a PCMCIA type interface circuit is provided. In Fig. 5, numeral 330 denotes a body portion (PC card portion) of the IC card reader/writer, 3304 a loading/unloading circuit, 3305 a connector, 3306 an IC card activation control circuit, 3307 a clock generation circuit, 3308 a reader/writer circuit, 3309 a read/write control circuit, 3310 a ROM, 3311 a data waveform formation and extraction circuit, 3312 an I/O port, 3313 a main program ROM, 3314 a RAM, 3315 a CPU, 3316 an IC card check data memory unit, 3317 an interface circuit conforming to the PCMCIA standard, 3318 a power supply circuit, 320 a computer body, 321 a PCMCIA interface slot (PC card slot), 322 a keyboard, and 323 a display.

The PC card reader/writer 33 according to the embodiment of the present invention includes, in the body portion 330 thereof, the IC card insertion opening 331 for incorporating the IC card 10 into the IC card reader/writer body, the loading/unloading circuit 3304 for driving the IC card 10, the connector 3305 with the IC card 10, the activation control circuit 3306 and the clock generation circuit 3307 for supplying electric power and a clock signal to the IC card 10 to activate the IC card 10, respectively, the reader/writer circuit 3308 for reading data from the IC card 10 and writing data into the IC card 10, the read/write control circuit 3309 for controlling operation of the reader/writer 3308, the ROM 3310 in which a program for causing the CPU 3315 to control the basis operation of IC card conforming to the ISO standard is stored, the data waveform formation and extraction circuit 3311 for performing formation of waveform of data and extraction of data read from the IC card 10, the I/O port 3312 for inputting/outputting data between the reader/writer circuit 3308 and the CPU 3315, the ROM 3313 in which a main program for electronic wallet process for causing the CPU 3315 to process electronic money stored in the IC card 10 is stored, the RAM 3314 utilized for data processing by the CPU 3315, the CPU 3315, the IC card check data memory unit 3316 in which ID data for examining whether information stored in the IC card 10 is electronic money information or not is stored, the interface circuit 3317 conforming to the PCMCIA standard for performing transmission and reception of data between the IC card reader/writer body and the personal computer, and the power supply circuit 3318 for supplying electric power fed through the connector conforming to the PCMCIA standard to each circuit.

On the other hand, the personal computer 32 includes the display 323, the computer body 320 having the PCMCIA interface slot (PC card slot) 321, and the keyboard 322.

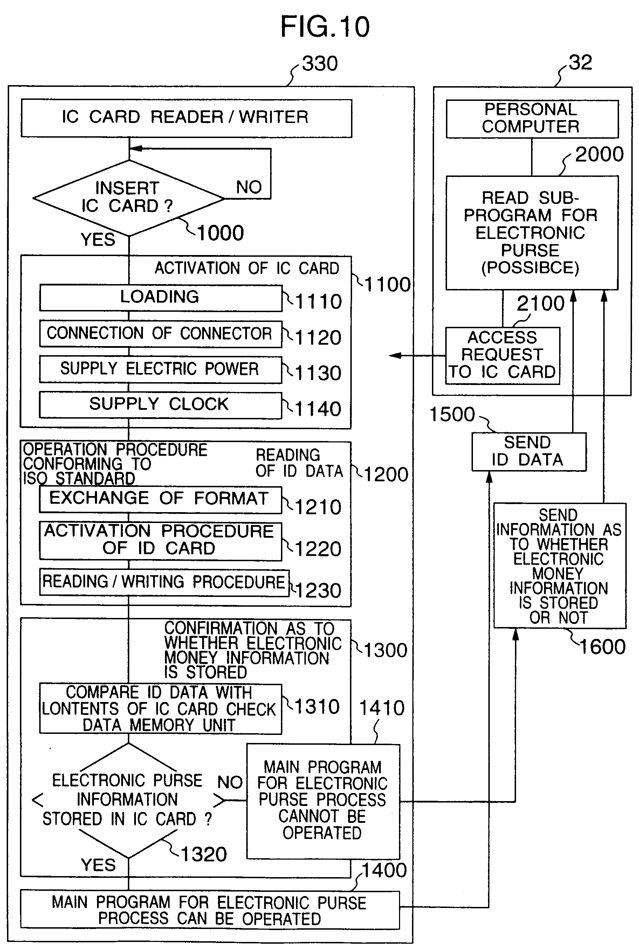

Referring now to Fig. 10, operation of the IC card reader/writer and the personal computer is described.

In Fig. 10, the body portion 330 of the IC card reader/writer according to the embodiment of the present invention is inserted into the PC card slot 321 of the personal computer 32. The IC card 10 is inserted into the IC card insertion opening 331 of the IC card reader/writer body 330, so that the CPU 3315 activates the IC card (1100). In this activation step (1100) of the IC card, when the IC card is inserted (1000), the IC card 10 is automatically loaded by the function of the loading/unloading circuit 3304 (1110) and the connector 3305 and a contact portion of the IC card 10 are brought into contact with each other (1120). When the CPU 3315 recognizes it, the CPU gives instructions to the control circuit 3306 for activating the IC card 10 to supply electric power (1130) and the clock (1140) to the IC card 10 to be activated.

The CPU 3315 then performs reading step of ID data in accordance with the operation procedure conforming to the ISO standard (1200). In this step (1200), the ID data indicative to a kind of information stored in the IC card 10 is read out from the IC card 10 through the connector 3305, the reader/writer 3308 and the like. This operation is performed in accordance with the program stored in the ROM 3310 in conformity to the ISO standard. The program stored in the ROM 3310 includes, for example, the format exchange (1210) for conforming the data input/output format for the IC card to the protocol of the IC card, the activation procedure (1220) of the IC card, the reading/writing procedure (1230) of data between the IC card and the IC card reader/writer and the like.

Next, the CPU 3315 performs the store confirmation step (1300) of electronic money information. In this step (1300), the ID data read from the IC card 10 as described above is compared with contents of the IC card check data memory unit 3316 (1310) to examine whether the electronic money information is stored in the IC card 10 (1320). When it is confirmed that the electronic money information is stored in the IC card 10, the IC card reader/writer 33 according to the embodiment of the present invention makes it possible to operate the main program for electronic wallet process (1400). Further, when it is confirmed that the electronic money information is not stored, the IC card reader/writer 33 makes it impossible to operate the main program for electronic wallet process.

The above-mentioned operation is automatically performed by the IC card reader/writer 33 regardless of operation of the personal computer 32.

On the other hand, the personal computer 32 reads out a sub-program for electronic wallet process (2000) and issues an access request to the IC card 10, through the PCMCIA interface 3317 to the IC card reader/writer 33 (2100) when it is necessary to communicate with the IC card 10. The IC card reader/writer 33 first sends the ID data read out previously from the IC card 10 to the personal computer 32 (1500) and when the electronic money information is stored, the IC card reader/writer 33 sends that effect to the personal computer 32 (1600).

When the modem unit 332 described in Fig. 3 is provided, an interface circuit for communication and a modem circuit may be connected to the CPU 3315.

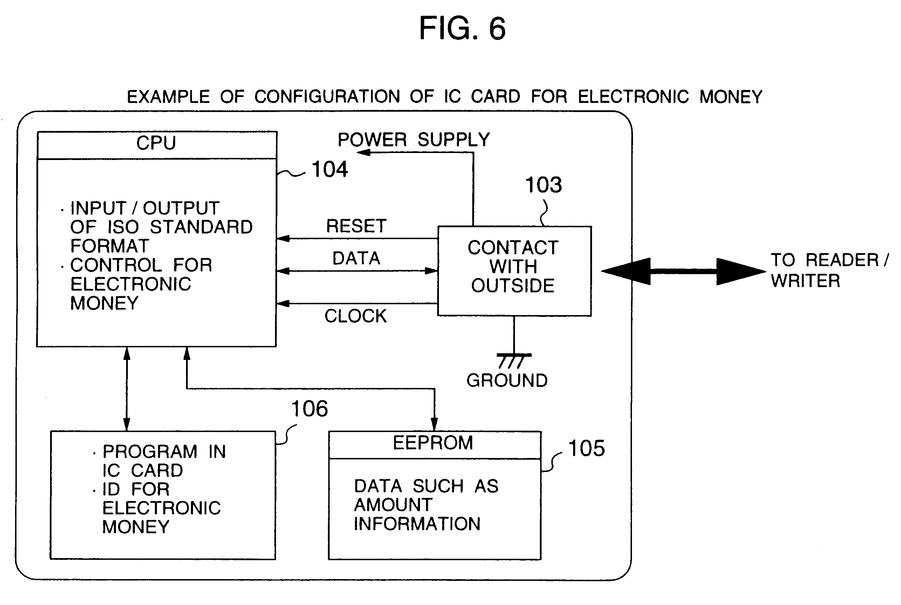

Fig. 6 is a block diagram schematically illustrating a definite example of the IC card 10 for electronic wallet. The IC card 10 for electronic wallet is described. In Fig. 6, numeral 103 denotes a contact portion with the outside, 104 a CPU, 105 an EEPROM, and 106 a ROM.

The IC card 10 accommodating electronic money for electronic wallet includes the contact portion 103 with the outside for transmitting and receiving signals, electric power, clock, reset signals and the like to and from the outside, the CPU 104 for controlling operation of the IC card 10, the ROM 106 in which programs for the CPU 104 are stored, and a writable EEPROM 105 in which data such as electronic money and the like are stored.

The CPU 104 performs the protocol control for inputting/outputting data in accordance with the ISO standard, the enciphering process in accordance with the program for electronic wallet stored in the ROM 106, and the like. Further, amount information for use as the electronic wallet, personal history information used and the like are stored in the EEPROM 105.

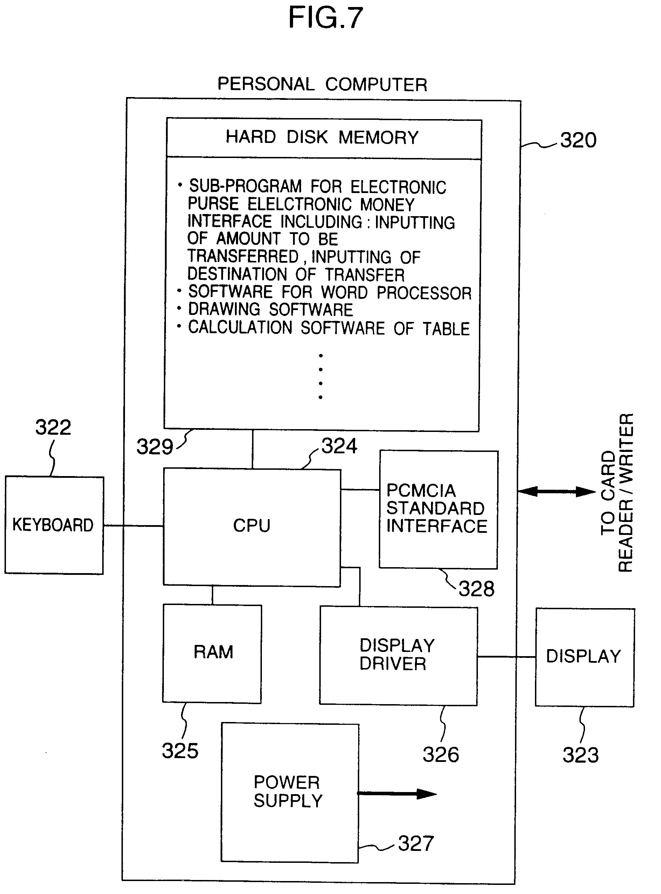

Fig. 7 is a block diagram schematically illustrating the personal computer body 320 connected to the card reader/writer 33 according to the embodiment of the present invention as described above. The personal computer body 320 is now described. In Fig. 7, numeral 324 denotes a CPU, 325 a RAM, 326 a display driver, 327 a power supply circuit, 328 a PCMCIA interface, 329 a hard disk memory, and other reference numerals are the same as those of Fig. 5.

As shown in Fig. 7, the body portion 320 of the personal computer 32 includes the hard disk memory 329, the CPU 324, the PCMCIA interface 328, the RAM 325, the display driver 326 and the power supply circuit 327. Stored in the hard disk memory 329 are a sub-program for electronic wallet for accessing to electronic money information stored in the IC card 10 together with a software for the word processor, a drawing software and a calculation software of table.

The basic electronic wallet operation of the card reader/writer according to the embodiment of the present invention structured above is performed by accessing to electronic money in the IC card 10 by the main program for electronic wallet in the ROM 3313 provided in the body portion 330 of the IC card reader/writer 33.

The merit of the above electronic wallet operation resides in that in general the access function to the electronic money information can be confined in an exclusive device to thereby enhance the safety for external unjust access and operation as compared with the case where the function of accessing to electronic money information in the IC card 10 is provided in the personal computer easy to access to the program source. Accordingly, the sub-program provided in the personal computer 32 is limited to only the function of giving auxiliary information such as destination of transfer of money and amount to be transferred to the IC card reader/writer 33.

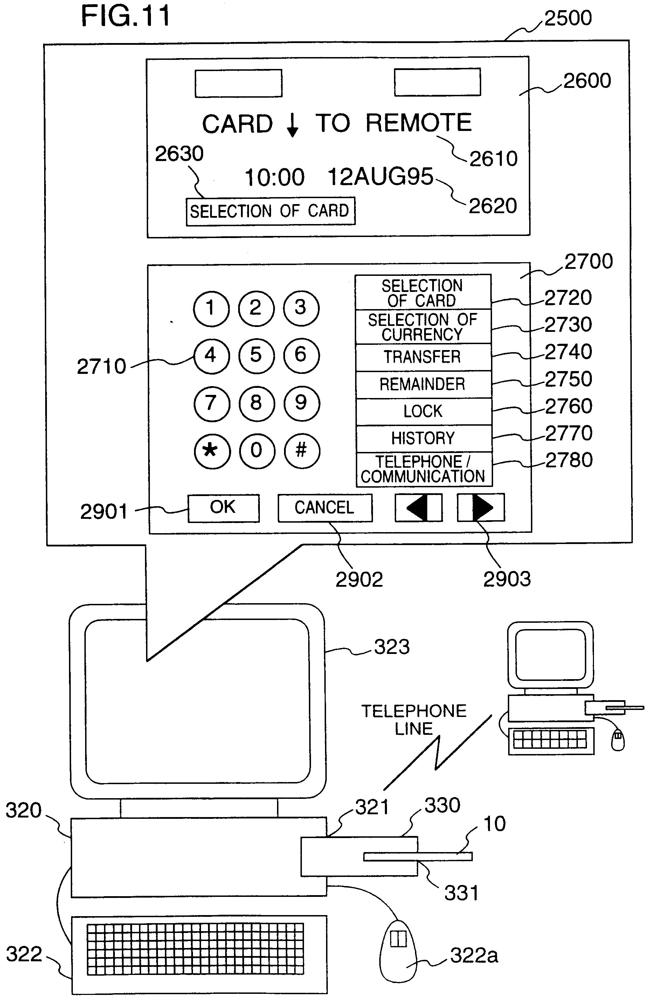

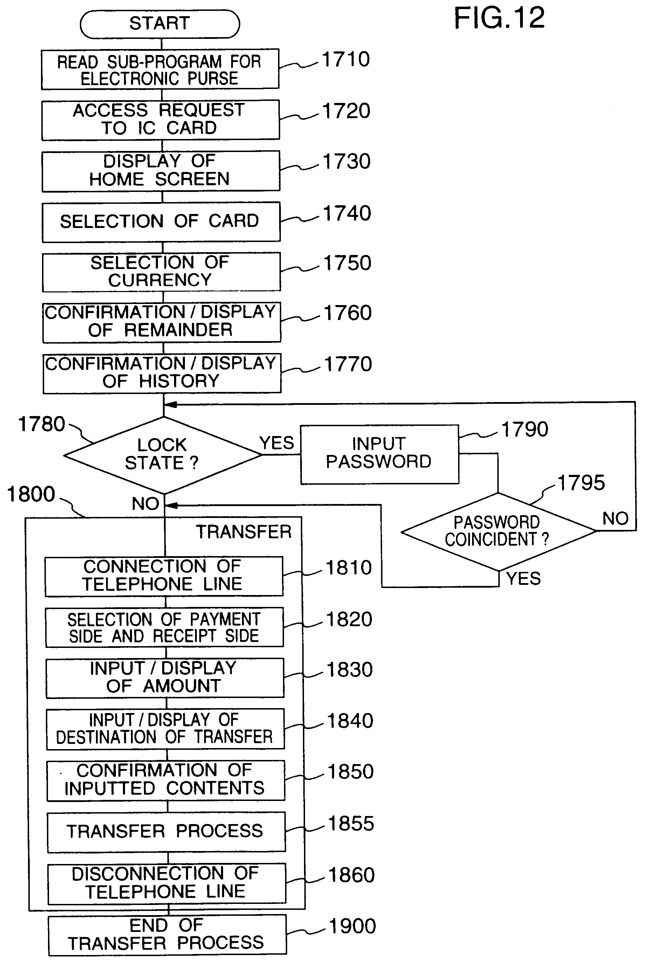

Referring now to Figs. 11 and 12, the process of transferring electronic money in the personal computer 32 using the IC card reader/writer according to the present invention is described. Fig. 11 illustrates a transfer display picture of the personal computer 32 and another personal computer and Fig. 12 is a flow chart showing operation thereof.

The state shown in Fig. 11 represents that an OS software of the personal computer 32 is started and the sub-program for electronic wallet stored in the hard disk memory 329 is started (1710). When the CPU 324 starts the sub-program for electronic wallet, the CPU 324 displays on the display 323 display contents on a home screen in which a display area 2600 and an operation area 2700 shown in Fig. 11 are displayed.

In the embodiment, by way of example, there is shown that an operation key on the operation area 2700 is operated by a cursor by means of a mouse 322a and confirmation and state of the operation are displayed on the display area 2600. It is a matter of course that in the personal computer 32 according to the present invention an operation command may be given through the keyboard 322 instead of the mouse 322a or the display 323 may be provided with a touch panel and the operation key on the operation area 2700 may be touched by the finger. Further, the keyboard 322 may be operated without display of the operation area 2700 on the display screen.

The display area 2600 includes an area 2610 for displaying that the IC card of the personal computer is on the side of payment or receipt, a date area 2620, and a card selection area 2630 indicating a selection situation of a plurality of IC cards connected to the personal computer. Further, the operation area 2700 includes a ten key 2710 for inputting a telephone number and an amount of money, a card selection key 2720 for selecting an IC card from a plurality of IC cards connected to the personal computer, a currency selection key 2730 for selecting currency in the IC card 10, a transfer key 2640 for starting transfer process, a remainder key 2750 for commanding to confirm the remainder of the IC card 10, a lock key 2760 for confirming a lock state of the IC card or commanding to operate the lock state, a history key 2780 for indicating a history of the IC card, a telephone/communication key 2780 for changing the function of the personal computer 32 to voice telephone function or data communication function or cutting off of telephone line, an OK key 2901 for indicating decision, a cancel key 2902 for cancelling execution, and a pair of screen scroll keys 2903.

In the personal computer 32, an operation command can be given to the CPU 3315 of the IC card reader/writer by means of the operation keys provided in the operation area 2700 and the CPU 104 of the IC card 10 can be directly commanded on the basis of control of the CPU 3315.

In Fig. 12, when the CPU 324 of the personal computer 32 starts the sub-program for electric wallet, an access request is issued to the IC card reader/writer (1720) and the display picture of the home screen on which the display area 2600 and the operation area 2700 shown in Fig. 11 are displayed is displayed in the display 323 (1730).

On the other hand, the IC card reader/writer is in advance inserted into the PC card slot 321 of the personal computer 32 and the IC card 10 is also inserted into the IC card reader/writer. The main program for electronic wallet process is set to the operable state in the same operation as that of Fig. 10.

When the IC card reader/writer receives the access request, the ID data of the ID card 10 and information as to whether electronic money information is stored or not are sent to the personal computer 32.

When the personal computer 32 receives the ID data of the ID card 10 and the information as to whether the electronic money information is stored or not, the personal computer 32 can be operated to make confirmation of the command for selecting the card (1740), confirmation of the command for selecting currency (1750) and confirmation/display of the remainder (1760). Transfer process (1800) relating to receipts and payments of electronic money between the IC cards 10 cannot be performed as far as the lock state of the IC card 10 is not changed to the unlock state. That is, the lock state can be confirmed by pushing the lock key 2760 of the operation area 2700. When the CPU 324 of the personal computer 32 recognizes on the basis of the information from the IC card reader/writer that the IC card 10 is in the unlock state, the CPU 324 receives the transfer process (1800) and when the IC card 10 is in the lock state, the CPU 324 displays a picture for inputting a password and receives the password. When the CPU 324 receives the password, the password is sent to the CPU 3315 of the IC card reader/writer and the password received by the CPU 3315 is compared with the password registered in the IC card 10 (1795). When permission of the CPU 3315 is obtained, the CPU 324 receives the transfer process (1800).

Receipts and payments of electronic money performed between the IC card 10 connected to the personal computer 32 and another IC card 10 by utilizing the telephone line is now described.

First of all, the telephone/communication key 2780 is pushed to call the IC card telephone having the same function as that of the other party's personal computer or the personal computer 32, so that the voice telephone can be effected. The personal computer 32 is connected in parallel to an usual telephone or handset in the branch manner and the connection is switched by the telephone/communication key 2780. It is a matter of course that the voice telephone may be provided in the personal computer 32.

Then, after making arrangements with the other party by the telephone to decide the receipt side and the payment side, selection of the payment side and the receipt side (1820), input/display of amount (1930), input/display of a destination of transfer (1804) and confirmation of inputted contents (1850) are performed. Thereafter, the telephone/communication key (2780) is pushed to change the voice communication to the data communication and the transfer key 2740 is pushed, so that the transfer process (1855) is performed. Then, the telephone line is disconnected (1860) to complete the transfer process (1900). Further, operation of the telephone/communication key (2780) may be made before selection of the payment side and the receipt side (1820).

In the foregoing description, the receipts and payments of electronic money between the IC cards 10 connected through the telephone line, while two IC card reader/writers may be connected to the personal computer 32 as described in Fig. 4 so that receipts and payments of electronic money between two IC cards can be made in the same manner as above.

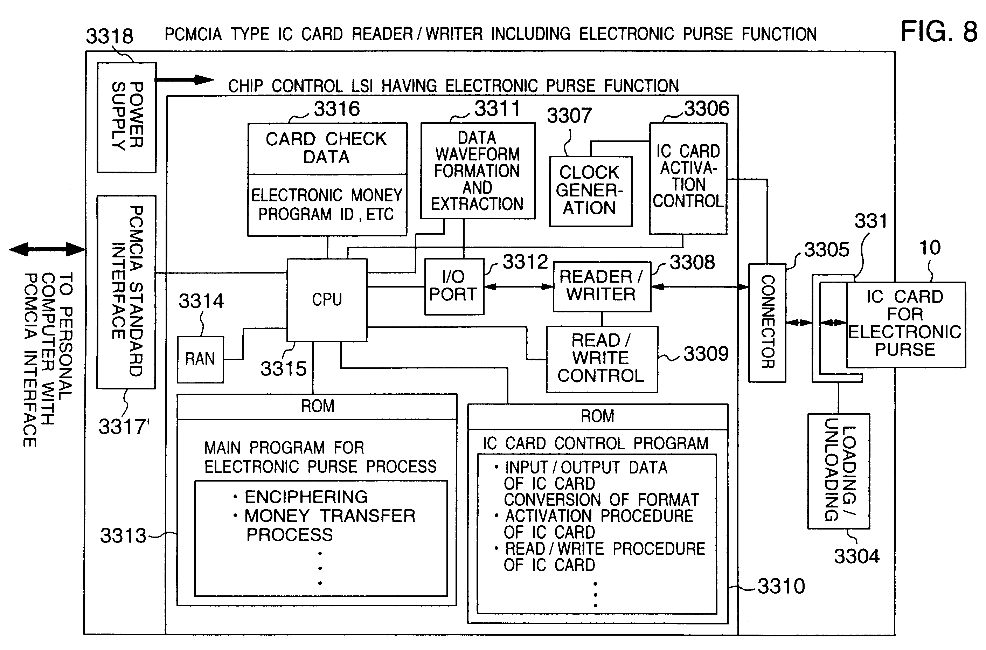

Fig. 8 is a block diagram schematically illustrating the IC card reader/writer of PCMCIA type including the electronic wallet function according to another embodiment of the present invention, which has the same function as the IC card reader/write of PCMCIA type shown in Fig. 5. Reference numerals of Fig. 8 designate the same elements as those of Fig. 5.

The IC card reader/writer of PCMCIA type shown in Fig. 8 further enhances the safety for external unjust access and operation by confining the access function to the electronic money information in the IC card into the exclusive device.

More particularly, the embodiment shown in Fig. 8 includes the control circuit 3306 and the clock generation circuit 3307 for supplying electric power and a clock signal to the IC card 10 to activate the IC card 10, respectively, the reader/writer circuit 3308 for reading data from the IC card 10 and writing data into the IC card 10, the read/write control circuit 3309 for controlling operation of the reader/writer 3308, the ROM 3310 in which a program for causing the CPU 3315 to control the basis operation of IC card conforming to the ISO standard is stored, the data waveform formation and extraction circuit 3311 for performing formation of waveform of data and extraction of data read from the IC card 10, the I/O port 3312 for inputting/outputting data between the reader/writer circuit 3308 and the CPU 3315, the ROM 3313 in which a main program for electronic wallet process for causing the CPU 3315 to process electronic money stored in the IC card 10 is stored, the RAM 3314 utilized for data processing by the CPU 3315, the IC card check data memory unit 3316 in which ID data for examining whether information stored in the IC card 10 is electronic money information or not is stored and the CPU 3315 as a one-chip control LSI 331 having the electronic wallet function and integrated into one chip.

The embodiment of the present invention shown in Fig. 8 can enhance the safety. It is apparent that other circuits such as a PCMCIA standard interface circuit may be included in the above one-chip LSI.

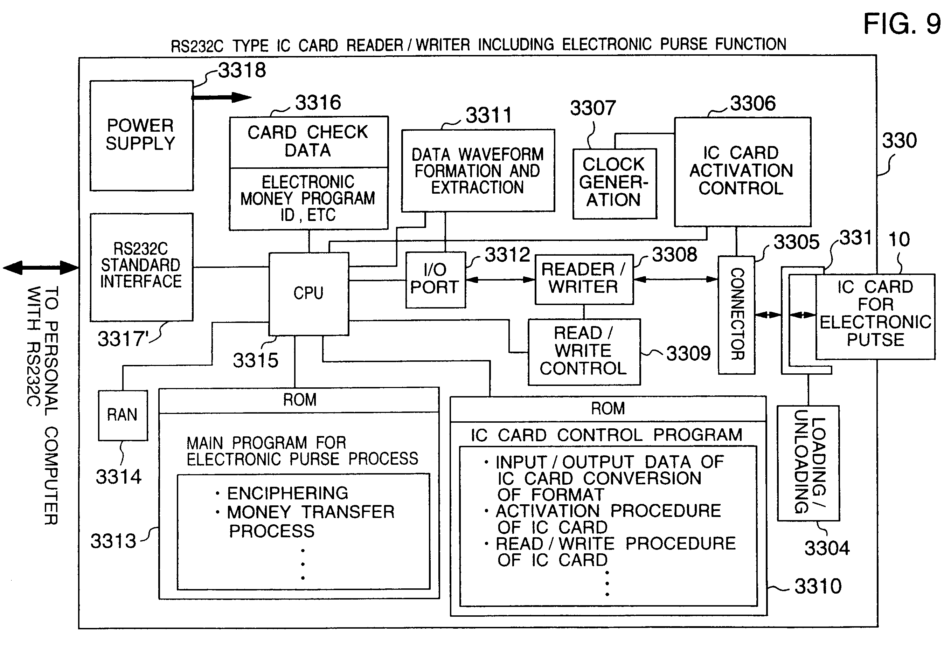

Fig. 9 is a block diagram schematically illustrating the IC card reader/writer including the electronic wallet function according to still another embodiment of the present invention. The IC card reader/writer of the embodiment of Fig. 9 is connected to the personal computer through an interface conforming to the RS232C standard. In Fig. 9, numeral 3317' denotes a data interface circuit of the RS232C standard, and other reference numerals are the same as those of Fig. 5.

The embodiment of the present invention shown in Fig. 9 is different from the embodiment described with reference to Fig. 5 in that the data interface circuit 3317' for interfacing the IC card reader/writer to an external device and conforming to the RS232C standard is provided. The embodiment of Fig. 9 has the same function as that of Fig. 5 and can perform the same process.

The embodiment of the present invention shown in Fig. 9 may be integrated into a one-chip control LSI in the same manner as described in Fig. 8.

According to the embodiment of the present invention, when data in the IC card 10 is processed, when settlement of accounts by electronic money is performed between the IC cards, and the like by using the personal computer in the electronic currency system, it is suitable to make interface between the personal computer and the IC card and it can be used to read data such as electronic money, history, personal information and the like recorded in the memory of the IC card by the apparatus such as the personal computer or perform writing and updating of data.

As described above, according to the present invention, there can be provided the reader/writer for electronic money card and the personal computer including the reader/writer suitable for use in interface between the personal computer and the electronic money card when the personal computer in the electronic currency system is used to perform settlement of accounts by electronic money between the personal computer and another electronic money card. Further, there can be provided the reader/writer for electronic money card and the personal computer including the reader/writer which can be used to read data such as electronic money, history, personal information and the like recorded in the memory of the electronic money card by the apparatus such as the personal computer or perform writing and updating of data.

## Claims

1. A reader/writer (33) for an electronic money card of a personal computer (32) used with the electronic money card (10) including at least an integrated circuit capable of writing and reading digital information, comprising:
a control unit (3315) for reading from and writing to said electronic money card (10).

2. A reader/writer (33) for an electronic money card of a personal computer (32) used with said electronic money card (10), comprising:
reading and writing means (3308) for reading digital information from said electronic money card and writing digital information to said electronic money card;
means (3315) for detecting that an electronic money information is stored in said electronic money card on the basis of information read by said reading and writing means;
electronic money processing means (3315) operative on the basis of an output of said detecting means and for accessing to said electronic money card; and
data input/output means (3317) for inputting and outputting digital information between said electronic money processing means and an external device.

3. A reader/writer (33) for an electronic money card of a personal computer (32) used with the electronic money card (10), comprising:
reading and writing means (3308) for reading digital information from said electronic money card and writing digital information to said electronic money card;
means (3315) for detecting that an electronic money information is stored in said electronic money card on the basis of information read by said reading and writing means;
electronic money processing means (3315) operative on the basis of an output of said detecting means and for accessing to said electronic money card; and
data input/output means (3317) for inputting and outputting digital information between said electronic money processing means and an external device,
all of said means being integrated into a one-chip control LSI.

4. A reader/writer for an electronic money card according to any of Claims 1 to 3, comprising a mechanism (321) for incorporating said input/output means (3317) into an information apparatus (32, 332) for sending digital information.

5. A reader/writer for an electronic money card according to Claim 4, wherein said information apparatus comprises a modem (332) or a personal computer (32).

6. A reader/writer for an electronic money card according to Claim 5, wherein when said modem or said personal computer is connected through a communication line to an apparatus including an electronic money card accommodating electronic money, receipts and payments of electronic money are performed between said electronic money cards.

7. A reader/writer for an electronic money card for interfacing between an electronic money card used in an electronic currency system and a personal computer including an inlet for inserting a memory device, comprising:
a connector portion for connecting to a memory card connector of a memory card;
a card insertion opening (331) into which said electronic money card (10) is inserted;
a connector (3305) for electrically connecting said electronic money card inserted into said card insertion opening (321); and
a control unit (3308, 3309, 3315) for reading from and writing to said electronic money card.

8. A reader/writer for an electronic money card for interfacing between an electronic money card including at least an integrated circuit capable of writing and reading digital information and a personal computer including an inlet for inserting a memory device, comprising:
reading and writing means (3308) for reading digital information from said electronic money card and writing digital information to said electronic money card;
means (3315) for detecting that a program for handling electronic money in an IC card is stored on the basis of information read by said reading and writing means;
electronic money processing means (3315) operative on the basis of an output of said detecting means and for accessing to an electronic money program in said electronic money card; and
data input/output means (3317) for inputting and outputting digital information between said electronic money processing means and an external device;
said input/output means including:
a connector portion for connecting to a memory card connector of a memory card; and
a connector (3305) for electrically connecting to said electronic money card inserted into a card insertion opening (331) into which said electronic money card is inserted.

9. A reader/writer for an electronic money card for interfacing between an electronic money card including at least an integrated circuit capable of writing and reading digital information and a personal computer including an inlet for inserting a memory device, comprising:
reading and writing means (3308) for reading digital information from said electronic money card and writing digital information to said electronic money card;
means (3315) for detecting that a program for handling electronic money in an IC card is stored on the basis of information read by said reading and writing means;
electronic money processing means (3315) operative on the basis of an output of said detecting means and for accessing to an electronic money program in said electronic money card; and
data input/output means (3317) for inputting and outputting digital information between said electronic money processing means and an external device;
said data input/output means including:
a connector portion for connecting to a memory card connector of a memory card; and
a connector (3305) for electrically connecting to said electronic money card inserted into a card insertion opening (331) into which said electronic money card is inserted,
all of said means being integrated into a one-chip control LSI.

10. A reader/writer for an electronic money card according to any of Claims 7 to 9, comprising communication means.

11. A personal computer including a control unit, a display unit, an input unit, a memory unit and an inlet inserting a memory device, comprising:
a reader/writer for an electronic money card mounted to said memory card slot for interfacing between the electronic money card including at least an integrated circuit capable of writing and reading digital information and said personal computer;
said reader/writer for said electronic money card including:
a connector portion for connecting to a memory card connector of a memory card;
a card insertion opening (331) into which said electronic money card is inserted;
a connector (3305) for electrically connecting to said electronic money card inserted into said card insertion opening; and
a control unit for reading from and writing to said electronic money card.

12. A personal computer including a control unit, a display unit, an input unit, a memory unit and an inlet for inserting a memory device, comprising:
a reader/writer for an electronic money card mounted to said memory card slot for interfacing between said electronic money card including at least an integrated circuit capable of writing and reading digital information and said personal computer;
said reader/writer for said electronic money card including:
reading and writing means (3308) for reading digital information from said electronic money card and writing digital information to said electronic money card;
means (3315) for detecting that a program for handling electronic money in an electronic money card is stored on the basis of information read by said reading and writing means;
electronic money processing means (3315) operative on the basis of an output of said detecting means and for accessing to an electronic money program in said electronic money card; and
data input/output means (3317) for inputting and outputting digital information between said electronic money processing means and an external device;
said data input/output means including:
a connector portion for connecting to a memory card connector of a memory card; and
a connector (3305) for electrically connecting to said electronic money card inserted into a card insertion opening (331) into which said electronic money card is inserted;
said control unit of said personal computer reading an electronic money sub-program stored in said memory and accessing to said electronic money processing means.

13. A personal computer according to Claim 11 or 12, comprising communication means.

14. A personal computer according to Claim 13, comprising two inlets for inserting a memory device (321) disposed vertically so that said reader/writer for said electronic money card including a modem (332) and said reader/writer for said electronic money card can be inserted into said two inlets for inserting a memory device (321) to be arranged vertically, said modem being mounted to said reader/writer so that the bottom of said modem and the bottom of said reader/writer are coplanar.
